# EUROPÄISCHE PATENTSCHRIFT

(11) **EP 1 639 317 B1**
(45) Veröffentlichungstag und Bekanntmachung des Hinweises auf die Patenterteilung: **22.08.2007**
(21) Anmeldenummer: 04741706.8
(22) Anmeldetag: 02.06.2004
(51) Int. Cl.: G01C 19/56

(54) **DREHRATENSENSOR MIT EINEM VIBRATIONSKREISEL UND VERFAHREN ZUM ABGLEICH DES DREHRATENSENSORS**
ROTATIONAL SPEED SENSOR COMPRISING A VIBRATING GYROSCOPE AND METHOD FOR EQUALISING THE ROTATIONAL SPEED SENSOR
CAPTEUR DE VITESSE DE ROTATION POURVU D'UN GYROSCOPE VIBRANT, ET PROCEDE D'AJUSTAGE DE CE CAPTEUR DE VITESSE DE ROTATION

(30) Priorität: 30.06.2003 DE 10329509
(43) Veröffentlichungstag der Anmeldung: 29.03.2006
(73) Patentinhaber: SIEMENS AKTIENGESELLSCHAFT, 80333 München (DE)
(72) Erfinder: BETZ, Uwe, 61184 Karben (DE); MORELL, Heinz-Werner, 67659 Kaiserslautern (DE); SKORUPA, Raphael, 61348 Bad Homburg (DE)
(86) Internationale Anmeldenummer: PCT/EP2004/050993
(87) Internationale Veröffentlichungsnummer: WO 2005/001381

(56) Entgegenhaltungen:
- EP-A- 1 233 249
- US-A- 5 444 641
- US-A- 6 064 169

## Beschreibung

Die Erfindung betrifft einen Drehratensensor mit einem Vibrationskreisel, der Teil eines primären und eines sekundären Regelkreises ist, wobei die Regelkreise jeweils ein Ausgangssignal des Vibrationskreisels verstärken, demodulieren, remodulieren und als Erregersignal dem Vibrationskreisel wieder zuführen und wobei der primäre Regelkreis den überwiegenden Teil der Energie zur Aufrechterhaltung der Vibration aufbringt, und ein Verfahren zum Abgleich dieses Drehratensensors.

Solch ein Drehratensensor ist aus EP-A-1 233 249 und US-A-6 064 169 bekannt.

Der bei den Drehratensensoren nach dem Oberbegriff verwendete Vibrationskreisel stellt ein schmalbandiges Bandfilter dar und wird in Resonanz betrieben, beispielsweise mit einer Frequenz von 14 kHz. Das mit dem Drehratensensor zu erzeugende Drehratensignal wird dem sekundären Regelkreis entnommen und ist von der Amplitude und der Phasenlage des Ausgangssignals des Vibrationskreisels im sekundären Regelkreis abhängig. Bedingt durch Bauteiltoleranzen ist ein Abgleich der Regelkreise erforderlich.

Die Erfindung ermöglicht eine exakte Funktion der Regelkreise, insbesondere eine Einhaltung der Resonanzbedingungen dadurch, dass zur Erzeugung von Trägern, welche zur Demodulation und zur Remodulation dienen, ein Frequenzsynthesizer mit Mitteln zur Einstellung der Phasenlage der Träger untereinander vorgesehen ist und dass der Frequenzsynthesizer zusammen mit einer Phasenvergleichsschaltung einen Phasenregelkreis bildet, wobei der Phasenvergleichsschaltung das verstärkte Ausgangssignal im primären Regelkreis und ein vom Frequenzsynthesizer erzeugter Vergleichsträger zuführbar sind.

Vorzugsweise ist dabei vorgesehen, dass ein erster Träger einem Synchrondemodulator im primären Regelkreis und ein zweiter Träger einem Modulator im primären Regelkreis zuführbar ist. Dabei wird eine Einhaltung der Resonanzbedingung dadurch erfüllt, dass bei eingeschwungenem Phasenregelkreis die Phasenlage des zweiten Trägers derart gewählt ist, dass die Phasendrehung des gesamten primären Regelkreises einschließlich des Vibrationskreisels die Resonanzbedingung erfüllt.

Der Demodulator im primären Regelkreis hat zwar keinen unmittelbaren Einfluss auf die Resonanz im primären Kreis. Es hat sich jedoch als günstig herausgestellt, wenn ferner die Phasenlage des ersten Trägers demjenigen des verstärkten Ausgangssignals im primären Regelkreis entspricht.

Maßnahmen zum Betrieb des sekundären Regelkreises sind vorzugsweise derart vorgesehen, dass ein dritter und ein vierter Träger zueinander um 90° phasenverschoben sind und je einem Synchrondemodulator in einem ersten und in einem zweiten Zweig des sekundären Regelkreises zuführbar sind und dass ein fünfter und ein sechster Träger um 90° gegeneinader phasenverschoben sind und je einem Modulator im ersten und zweiten Zweig zuführbar sind.

Hierbei wird wohl die Resonanzbedingung im sekundären Regelkreis als auch eine Maximierung der Amplitude des Drehratensignals dadurch vorgenommen, dass bei eingeschwungenem Phasenregelkreis die Differenz der Phasenlagen des dritten und vierten Trägers zu den Phasenlagen des fünften und sechsten Trägers derart gewählt ist, dass im sekundären Regelkreis die Resonanzbedingung erfüllt ist und dass die Phasenlagen des dritten bis sechsten Trägers gegenüber dem Vergleichsträger derart gewählt sind, dass ein dem Synchrondemodulator im ersten Zweig über Filter abnehmbares Drehratensignal bei gegebener Drehung des Vibrationskreisels ein Maximum einnimmt.

Eine vorteilhafte Ausgestaltung des erfindungsgemäßen Drehratensensors besteht darin, dass ein nichtflüchtiger Speicher für bei einem vorherigen Abgleichvorgang festgelegte Werte der Phasenlagen vorgesehen ist, aus dem die Werte beim Einschalten des Drehratensensors gelesen und dem Frequenzsynthesizer zugeführt werden.

Wesentliche Komponenten der Regelkreise, insbesondere analoge, wie Verstärker und Filter, weisen eine temperaturabhängige Laufzeit auf. Ein einmal bei einer bestimmten Temperatur vorgenommener Abgleich kann bei dem erfindungsgemäßen Drehratensensor dadurch an die jeweilige Temperatur angepasst werden, dass eine temperaturabhängige Phasenkorrektur der Träger erfolgt.

Da die Resonanzfrequenz des Vibrationskreisels temperaturabhängig ist, kann hierfür auf einen separaten Temperatursensor dadurch verzichtet werden, dass zur temperaturabhängigen Phasenkorrektur eine Änderung der Schwingfrequenz des Vibrationskreisels als Maß für die Temperaturänderung verwendet wird.

Sollte auch die Temperaturabhängigkeit nicht vernachlässigbaren Exemplarstreuungen unterworfen sein, kann hierbei vorgesehen sein, dass im nichtflüchtigen Speicher Temperaturabhängigkeiten abgelegt sind.

Die Erfindung umfasst ferner ein Verfahren zum Abgleich eines Drehratensensors, das darin besteht,
- dass die Phasenlage eines Trägers für einen Modulator im primären Regelkreis zur Erfüllung einer Resonanzbedingung im primären Regelkreis eingestellt wird,
- dass danach eine Einstellung der Phasenlage von zwei gegeneinader um 90° phasenverschobenen Trägern für Synchrondemodulatoren im sekundären Regelkreis gegenüber der Phasenlage von zwei weiteren gegeneinander um 90° phasenverschobenen Trägern für Modulatoren im sekundären Regelkreis zur Erzielung einer Resonanzbedingung im sekundären Regelkreis erfolgt und
- dass anschließend bei in Drehung versetztem Vibrationskreisel die Phasenlagen der Träger für die Synchrondemodulatoren und für die Modulatoren im sekundären Regelkreis gleichsinnig im Verhältnis zum Vergleichsträger derart verstellt werden, dass das Drehratensignal ein Maximum aufweist.

Die Erfindung lässt zahlreiche Ausführungsformen zu. Eine davon ist schematisch in der Zeichnung anhand mehrerer Figuren dargestellt und nachfolgend beschrieben. Es zeigt:
- Fig. 1:: ein Blockschaltbild eines Drehratensensors,
- Fig. 2:: eine detailliertere Darstellung des primären und des sekundären Regelkreises einschließlich des Frequenzsynthesizers.

Das Ausführungsbeispiel sowie Teile davon sind zwar als Blockschaltbilder dargestellt. Dieses bedeutet jedoch nicht, dass die erfindungsgemäße Anordnung auf eine Realisierung mit Hilfe von einzelnen den Blöcken entsprechenden Schaltungen beschränkt ist. Die erfindungsgemäße Anordnung ist vielmehr in besonders vorteilhafter Weise mit Hilfe von hochintegrierten Schaltungen realisierbar. Dabei können Mikroprozessoren eingesetzt werden, welche bei geeigneter Programmierung die in den Blockschaltbildern dargestellten Verarbeitungsschritte durchführen.

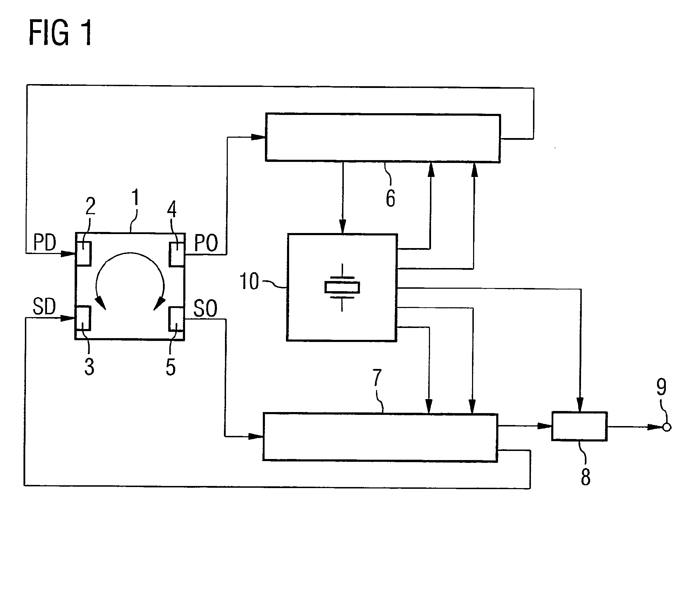

Fig. 1 zeigt ein Blockschaltbild einer Anordnung mit einem Vibrationskreisel 1 mit zwei Eingängen 2, 3 für ein primäres Erregersignal PD und ein sekundäres Erregersignal SD. Die Erregung erfolgt durch geeignete Wandler, beispielsweise elektromagnetische. Der Vibrationskreisel weist ferner zwei Ausgänge 4, 5 für ein primäres Ausgangssignal PO und ein sekundäres Ausgangssignal SO auf. Diese Signale geben die jeweilige Vibration an räumlich versetzten Stellen des Kreisels wieder. Derartige Kreisel sind beispielsweise aus EP 0 307 321 A1 bekannt und beruhen auf der Wirkung der Corioliskraft.

Der Vibrationskreisel 1 stellt ein Filter hoher Güte dar, wobei die Strecke zwischen dem Eingang 2 und dem Ausgang 4 Teil eines primären Regelkreises 6 und die Strecke zwischen dem Eingang 3 und dem Ausgang 5 Teil eines sekundären Regelkreises 7 ist. Der primäre Regelkreis 6 dient zur Anregung von Schwingungen mit der Resonanzfrequenz des Vibrationskreisels von beispielsweise 14 kHz. Die Anregung erfolgt dabei in einer Achse des Vibrationskreisels, zu welcher die für den sekundären Regelkreis benutzte Schwingungsrichtung um 90° versetzt ist. Im sekundären Regelkreis 7 wird das Signal SO in zwei Quadratur-Komponenten aufgespalten, von denen eine über ein Filter 8 einem Ausgang 9 zugeleitet wird, von welchem ein der Drehrate proportionales Signal abnehmbar ist.

In beiden Regelkreisen 6, 7 erfolgt ein wesentlicher Teil der Signalverarbeitung digital. Die zur Signalverarbeitung erforderlichen Signale werden in einem quarzgesteuerten digitalen Frequenzsynthesizer 10 erzeugt, dessen Taktfrequenz im dargestellten Beispiel 14,5 MHz beträgt.

Der sekundäre Regelkreis 7 enthält einen Verstärker 25, ein Anti-Alias-Filter 26 und einen Analog/Digital-Wandler 27. Mit Hilfe von Multiplizierern 28, 29, denen das verstärkte und digitalisierte Signal SO mit den noch nicht getrennten Komponenten I und Q und Träger T3 und T4 zugeführt werden, erfolgt je eine Synchrondemodulation und somit eine Aufspaltung in Realteil und Imaginärteil.

Beide Komponenten durchlaufen anschließend je ein (sinx/x)-Filter 30, 31 und ein Tiefpassfilter 32, 33. Aus dem gefilterten Realteil werden mit Hilfe einer Aufbereitungsschaltung 34 zwei Signale R1 und R2 abgeleitet, welche die mit dem Drehratensensor zu messende Drehrate darstellen. Die Signale R1 und R2 unterscheiden sich dadurch, dass das Signal R2 nicht den gesamten durch die verwendete Schaltungstechnik möglichen Amplitudenbereich von beispielsweise 0V bis +5V einnimmt. Zur Ausgabe einer Fehlermeldung wird das Signal R2 auf Null gelegt, was das angeschlossene System als Fehlermeldung erkennt.

Den Tiefpassfiltern 32, 33 ist je ein Addierer 35, 36 nachgeschaltet, mit denen Korrekturgrößen addiert werden können. Anschließend erfolgt mit Hilfe von Multiplizierern 37, 38 eine Remodulation beider Komponenten Si bzw. Sq mit Trägern T5 und T6. Eine Addition bei 39 ergibt wieder eine 14-kHz-Schwingung, die in einem Ausgangstreiber 40 in einen zur Anregung des Vibrationskreisels 1 geeigneten Strom umgewandelt wird.

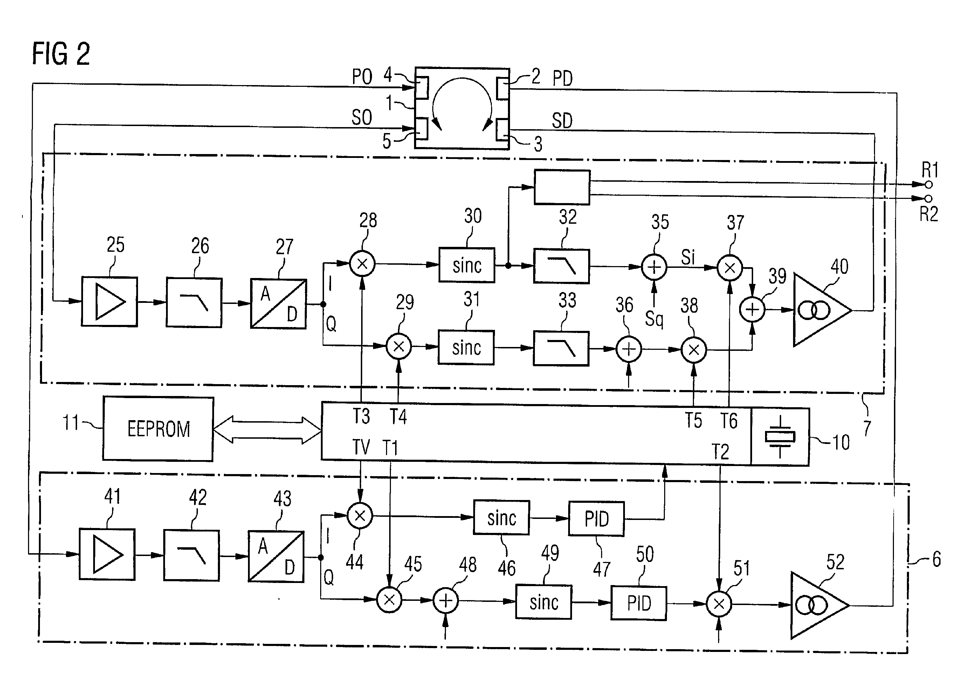

Fig. 2 zeigt ferner den primären Regelkreis 6, in welchem das Ausgangssignal PO des Vibrationskreisels 1 über einen Verstärker 41 und ein Anti-Alias-Filter 42 einem Analog/Digital-Wandler 43 zugeleitet wird. Dessen Ausgangssignal wird in ähnlicher Weise wie bei dem sekundären Regelkreis zwei Multiplizierern 44, 45 (Synchrondemodulatoren) zugeführt. An den Synchrondemodulator 44 schließt sich ein (sinx/x)-Filter 46 und ein PID-Glied 47 an. Der Ausgang des PID-Gliedes ist mit einem Eingang des Frequenzsynthesizers 10 verbunden, in welchen in an sich bekannter Weise durch Frequenzteilung einer von einem Quarz erzeugten Taktfrequenz von beispielsweise 14,5 MHz verschiedene Signale abgeleitet werden.

Der Multiplizierer, der als Phasenvergleichsschaltung dient, bildet mit dem Frequenzsynthesizer 10, dem Filter 46 und dem PID-Glied 47 eine Phasenregelschaltung (PLL), die bewirkt, dass die Frequenz der Träger derart geregelt wird, dass die Phasenlage des Vergleichsträgers Tv eine vorgegebene Beziehung zum Ausgangssignal des Analog/Digital-Wandlers 43 einnimmt - beispielsweise 90°. Der Frequenzsynthesizer 10 enthält neben einem Quarz-Oszillator programmierbare Zähler und Logikschaltungen, so dass die Frequenz und die Phasenlage mit zugeführten Steuersignalen eingestellt werden können.

Da Frequenzsynthesizer an sich bekannt sind, wird im vorliegenden Zusammenhang lediglich darauf hingewiesen, dass die von dem Frequenzsynthesizer 10 erzeugten Taktsignale Tv, T1 bis T6 die gleiche durch die Phasenregelschleife bedingte Frequenz aufweisen, jedoch bezüglich ihrer Phasenlage gegenüber dem Vergleichsträger Tv einstellbar sind. Die Daten für diese Einstellungen werden einem EEPROM 11 entnommen.

In einem weiteren Zweig des primären Regelkreises sind ein weiterer Multiplizierer 45, ein Addierer 48, ein (sinx/x)-Filter 49 und ein PID-Glied 50 angeordnet. Darauf folgt ein Multiplizierer 51 als Modulator, der den Träger T2 mit dem Ausgangssignal des PID-Glieds 50 moduliert und an eine Schaltung 52 weiterleitet, welche das Erregersignal PD in Form eines Stroms dem Eingang 2 des Vibrationskreisels 1 zuführt.

Zum Abgleich der Phasenlagen des Trägers T1 bis T6 wird zunächst, nachdem die Phasenregelschleife eingeschwungen ist, durch Eingabe entsprechender Werte von einem nicht dargestellten Abgleichgerät die Phasenlage des Trägers T2 in dem Frequenzsynthesizer 10 solange verstellt, bis in dem primären Kreis optimale Resonanzbedingungen herrschen. Zusätzlich kann noch die Phasenlage des Trägers T1 derart eingestellt werden, dass bei 45 nur die dort zu modulierende Komponente demoduliert wird, d.h., dass die Phasenlage des Trägers T1 mit derjenigen des Ausgangssignals des Analog/Digital-Wandlers 43 übereinstimmt.

In einem zweiten Schritt wird der sekundäre Regelkreis auf Resonanzbedingungen abgeglichen. Hierzu werden die Taktsignale T3 und T4, die einen Phasenwinkel von 90° einschließen, gegenüber den Phasenlagen der Taktsignale T5 und T6, die ebenfalls einen Phasenwinkel von 90° einschließen, verstellt. Durch die relative Verstellung ändern sich die Amplituden der beiden um 90° gegeneinander phasenverschobenen Komponenten, die mit dem Addierer 39 addiert werden. Dadurch ändert sich die Phasenlage des Erregersignals SD. Die Änderung erfolgt solange, bis die Resonanzbedingung für den sekundären Regelkreis erfüllt ist.

In einem dritten Schritt, bei welchem der Vibrationskreisel in Drehung versetzt wird, werden die Phasenlagen der Träger T3 und T4 soweit verschoben, dass das Drehratensignal ein Maximum einnimmt. Um den Einfluss dieser Verstellung auf die Gesamtphase zu eliminieren, werden die beiden Träger T5 und T6 in gleicher Weise verschoben. Nach Beendigung des Abgleichs werden die ermittelten Werte der Phasendifferenzen im EEPROM 11 abgelegt.

Außerdem können im Bedarfsfall im EEPROM 11 Temperaturabhängigkeiten der Laufzeiten abgelegt werden, die mit der im Frequenzsynthesizer bekannten Frequenzabweichung zu einer Korrektur der Phasenlagen der Takte T1 bis T6 dienen.

## Patentansprüche

1. Drehratensensor mit einem Vibrationskreisel (1), der Teil eines primären und eines sekundären Regelkreises (6,7) ist, wobei die Regelkreise jeweils ein Ausgangssignal des Vibrationskreisels verstärken, demodulieren, remodulieren und als Erregersignal dem Vibrationskreisel (1) wieder zuführen und wobei der primäre Regelkreis (6) den überwiegenden Teil der Energie zur Aufrechterhaltung der Vibration aufbringt, **dadurch gekennzeichnet, dass** der Drehratensensor zur Erzeugung von Trägern, welche zur Demodulation und zur Remodulation dienen, einen Frequenzsynthesizer (10) mit Mitteln zur Einstellung der Phasenlage der Träger untereinander besitzt und dass der Frequenzsynthesizer (10) zusammen mit einer Phasenvergleichsschaltung (44) einen Phasenregelkreis (10, 44, 46, 47) bildet, wobei der Phasenvergleichsschaltung (44) das verstärkte Ausgangssignal im primären Regelkreis (6) und ein vom Frequenzsynthesizer (10) erzeugter Vergleichsträger zuführbar sind.

2. Drehratensensor nach Anspruch 1, **dadurch gekennzeichnet, dass** ein erster Träger einem Synchrondemodulator (45) im primären Regelkreis (6) und ein zweiter Träger einem Modulator (51) im primären Regelkreis (6) zuführbar ist.

3. Drehratensensor nach Anspruch 2, **dadurch gekennzeichnet, dass** bei eingeschwungenem Phasenregelkreis (10, 44, 46, 47) die Phasenlage des zweiten Trägers derart gewählt ist, dass die Phasendrehung des gesamten primären Regelkreises (6) einschließlich des Vibrationskreisels (1) die Resonanzbedingung erfüllt.

4. Drehratensensor nach Anspruch 3, **dadurch gekennzeichnet, dass** ferner die Phasenlage des ersten Trägers demjenigen des verstärkten Ausgangssignals im primären Regelkreis (6) entspricht.

5. Drehratensensor nach einem der Ansprüche 2 bis 4, **dadurch gekennzeichnet, dass** ein dritter und ein vierter Träger zueinander um 90° phasenverschoben sind und je einem Synchrondemodulator (28, 29) in einem ersten und in einem zweiten Zweig des sekundären Regelkreises (7) zuführbar sind und dass ein fünfter und ein sechster Träger um 90° gegeneinader phasenverschoben sind und je einem Modulator (35, 36) im ersten und zweiten Zweig zuführbar sind.

6. Drehratensensor nach Anspruch 5, **dadurch gekennzeichnet, dass** bei eingeschwungenem Phasenregelkreis (10, 44, 46, 47) die Differenz-der Phasenlagen des dritten und vierten Trägers zu den Phasenlagen des fünften und sechsten Trägers derart gewählt ist, dass im sekundären Regelkreis (7) die Resonanzbedingung erfüllt ist und dass die Phasenlagen des dritten bis sechsten Trägers gegenüber dem Vergleichsträger derart gewählt sind, dass ein dem Synchrondemodulator (28) im ersten Zweig über Filter (30) abnehmbares Drehratensignal bei gegebener Drehung des Vibrationskreisels (1) ein Maximum einnimmt.

7. Drehratensensor nach einem der vorhergehenden Ansprüche, **dadurch gekennzeichnet, dass** ein nichtflüchtiger Speicher (11) für bei einem vorherigen Abgleichvorgang festgelegte Werte der Phasenlagen vorgesehen ist, aus dem die Werte beim Einschalten des Drehratensensors gelesen und dem Frequenzsynthesizer (10) zugeführt werden.

8. Drehratensensor nach Anspruch 7, **dadurch gekennzeichnet, dass** eine temperaturabhängige Phasenkorrektur der Träger erfolgt.

9. Drehratensensor nach Anspruch 8, **dadurch gekennzeichnet, dass** zur temperaturabhängigen Phasenkorrektur eine Änderung der Schwingfrequenz des Vibrationskreisels (1) als Maß für die Temperaturänderung verwendet wird.

10. Drehratensensor nach einem der Ansprüche 8 oder 9, **dadurch gekennzeichnet, dass** im nichtflüchtigen Speicher (11) Temperaturabhängigkeiten abgelegt sind.

11. Verfahren zum Abgleich eines Drehratensensors mit einem Vibrationskreisel (1), der Teil eines primären und eines sekundären Regelkreises (6,7) ist, wobei die Regelkreise (6,7) jeweils ein Ausgangssignal des Vibrationskreisels (1) verstärken, demodulieren, remodulieren und als Erregersignal dem Vibrationskreisel (1) wieder zuführen, wobei der primäre Regelkreis (6) den überwiegenden Teil der Energie zur Aufrechterhaltung der Vibration aufbringt, **dadurch gekennzeichnet, dass** zur Erzeugung von Trägern, welche zur Demodulation und zur Remodulation dienen, ein Frequenzsynthesizer (10) mit Mitteln zur Einstellung der Phasenlage der Träger untereinander vorgesehen ist, wobei der Frequenzsynthesizer (10) zusammen mit einer Phasenvergleichsschaltung (44) einen Phasenregelkreis (10, 44, 46, 47) bildet und wobei ferner der Phasenvergleichsschaltung (44) das verstärkte Ausgangssignal im primären Regelkreis (6) und ein vom Frequenzsynthesizer (10) erzeugter Vergleichsträger zuführbar sind,
wobei
- die Phasenlage eines Trägers für einen Modulator im primären Regelkreis (6) zur Erfüllung einer Resonanzbedingung im primären Regelkreis (6) eingestellt wird,
- danach eine Einstellung der Phasenlage von zwei gegeneinader um 90° phasenverschobenen Trägern für Synchrondemodulatoren (28, 29) im sekundären Regelkreis (7) gegenüber der Phasenlage von zwei weiteren gegeneinander um 90° phasenverschobenen Trägern für Modulatoren (37, 38) im sekundären Regelkreis (7) zur Erzielung einer Resonanzbedingung im sekundären Regelkreis erfolgt und
- anschließend bei in Drehung versetztem Vibrationskreisel (1) die Phasenlagen der Träger für die Synchrondemodulatoren (28, 29) und für die Modulatoren (37, 38) im sekundären Regelkreis (7) gleichsinnig im Verhältnis zum Vergleichsträger derart verstellt werden, dass das Drehratensignal ein Maximum aufweist.

## Claims

1. Rotational speed sensor having a vibrating gyroscope (1) which is part of a primary and of a secondary control loop (6, 7), where the control loops respectively amplify an output signal from the vibrating gyroscope, demodulate it, remodulate it and supply it back to the vibrating gyroscope (1) as excitation signal, and where the primary control loop (6) provides the predominant part of the energy for maintaining the vibration, **characterized in that** the rotational speed sensor has, for the purpose of producing carriers which are used for demodulation and for remodulation, a frequency synthesizer (10) having means for setting the phases of the carriers in relation to one another, and **in that** the frequency synthesizer (10) and a phase comparison circuit (44) together form a phase locked loop (10, 44, 46, 47), the phase comparison circuit (44) being able to be supplied with the amplified output signal in the primary control loop (6) and with a comparative carrier produced by the frequency synthesizer (10).

2. Rotational speed sensor according to claim 1, **characterized in that** a first carrier can be supplied to a synchronous demodulator (45) in the primary control loop (6) and a second carrier can be supplied to a modulator (51) in the primary control loop (6).

3. Rotational speed sensor according to claim 2, **characterized in that** when the phase locked loop (10, 44, 46, 47) is locked the phase of the second carrier is chosen such that the phase rotation of the total primary control loop (6), including the vibrating gyroscope (1), meets the resonance condition.

4. Rotational speed sensor according to claim 3, **characterized in that** additionally the phase of the first carrier corresponds to that of the amplified output signal in the primary control loop (6).

5. Rotational speed sensor according to one of claims 2 to 4, **characterized in that** a third and a fourth carrier are phase shifted through 90° with respect to one another and can be supplied to a respective synchronous demodulator (28, 29) in a first and in a second path of the secondary control loop (7), and **in that** a fifth and a sixth carrier are phase shifted through 90° with respect to one another and can be supplied to a respective modulator (35, 36) in the first and second paths.

6. Rotational speed sensor according to claim 5, **characterized in that** when the phase locked loop (10, 44, 46, 47) is locked the difference between the phases of the third and fourth carriers and the phases of the fifth and sixth carriers is chosen such that the resonance condition is met in the secondary control loop (7), and **in that** the phases of the third to sixth carriers are chosen with respect to the comparative carrier such that a rotational speed signal which can be picked off from the synchronous demodulator (28) in the first path via a filter (30) adopts a maximum for a given rotation of the vibrating gyroscope (1).

7. Rotational speed sensor according to one of the preceding claims, **characterized in that** a nonvolatile memory (11) is provided for phase values stipulated in a previous trimming process, from which memory the values can be read and supplied to the frequency synthesizer (10) when the rotational speed sensor is turned on.

8. Rotational speed sensor according to claim 7,
**characterized in that** temperature-dependent phase correction of the carriers is performed.

9. Rotational speed sensor according to claim 8, **characterized in that** temperature-dependent phase correction is performed using a change in the oscillation frequency of the vibrating gyroscope (1) as a measure of the temperature change.

10. Rotational speed sensor according to either of claims 8 and 9, **characterized in that** the nonvolatile memory (11) stores temperature dependencies.

11. Method for trimming a rotational speed sensor having a vibrating gyroscope (1) which is part of a primary and of a secondary control loop (6, 7), where the control loops (6, 7) respectively amplify an output signal from the vibrating gyroscope (1), demodulate it, remodulate it and supply it back to the vibrating gyroscope (1) as excitation signal, and where the primary control loop (6) provides the predominant part of the energy for maintaining the vibration, **characterized in that** there is, for the purpose of producing carriers which are used for demodulation and for remodulation, a frequency synthesizer (10) having means for setting the phases of the carriers in relation to one another, where the frequency synthesizer (10) and a phase comparison circuit (44) together form a phase locked loop (10, 44, 46, 47), and where the phase comparison circuit (44) may also be supplied with the amplified output signal in the primary control loop (6) and with a comparative carrier produced by the frequency synthesizer (10), in which
- the phase of a carrier for a modulator in the primary control loop (6) is set to meet a resonance condition in the primary control loop (6),
- after that the phase of two carriers which are phase shifted through 90° with respect to one another for synchronous demodulators (28, 29) in the secondary control loop (7) is set in relation to the phase of two further carriers which are phase shifted through 90° with respect to one another for modulators (37, 38) in the secondary control loop (7) in order to attain a resonance condition in the secondary control loop, and
- when the vibrating gyroscope (1) is set in rotation the phases of the carriers for the synchronous demodulators (28, 29) and for the modulators (37, 38) in the secondary control loop (7) are then adjusted in the same sense in relation to the comparative carrier such that the rotational speed signal is at a maximum.

## Revendications

1. Capteur de vitesse de rotation pourvu d'un gyroscope à vibration (1) faisant partie d'un circuit de régulation primaire (6) et d'un circuit de régulation secondaire (7), où chacun des circuits de régulation amplifient, démodulent, remodulent un signal de sortie du gyroscope à vibration et l'appliquent de nouveau, en tant que signal d'excitation, au gyroscope à vibration (1) et où le circuit de régulation primaire (6) fournit la plus grande partie de l'énergie nécessaire à la poursuite de la vibration, **caractérisé par le fait que** le capteur de vitesse de rotation, pour la production de porteuses, qui servent à la démodulation et à la remodulation, comporte un synthétiseur de fréquences (10) avec des moyens permettant de régler la position de phase réciproque des porteuses et que le synthétiseur de fréquences (10) forme, en commun avec un circuit de comparaison de phase (44), un circuit de régulation de phase (10, 44, 46, 47), le signal de sortie amplifié dans le circuit de régulation primaire (6) et une porteuse de comparaison générée par le synthétiseur de fréquences (10) pouvant être appliqués au circuit de comparaison de phase (44).

2. Capteur de vitesse de rotation selon la revendication 1, **caractérisé par le fait qu'**une première porteuse peut être appliquée à un démodulateur synchrone (45) dans le circuit de régulation primaire (6) et qu'une deuxième porteuse peut être appliquée à un modulateur (51) dans le circuit de régulation primaire (6).

3. Capteur de vitesse de rotation selon la revendication 2, **caractérisé par le fait que**, lorsque le circuit de régulation de phase (10, 44, 46, 47) est en fonction, la position de phase de la deuxième porteuse est choisie de manière telle que la rotation de phase de l'ensemble du circuit de régulation primaire (6), y compris le gyroscope à vibration (1), remplit la condition de résonance.

4. Capteur de vitesse de rotation selon la revendication 3, **caractérisé par le fait que**, en outre, la position de phase de la première porteuse correspond à celle du signal de sortie amplifié dans le circuit de régulation primaire (6).

5. Capteur de vitesse de rotation selon l'une des revendications 2 à 4, **caractérisé par le fait qu'**une troisième et une quatrième porteuse ont entre elles un décalage de phase de 90° et peuvent être appliquées chacune à un démodulateur synchrone (28, 29) dans une première et dans une deuxième branche du circuit de régulation secondaire (7) et qu'une cinquième et une sixième porteuse ont entre elles un décalage de phase de 90° et peuvent être appliquées chacune à un modulateur (35, 36) dans la première et dans la deuxième branche.

6. Capteur de vitesse de rotation selon la revendication 5, **caractérisé par le fait que**, lorsque le circuit de régulation de phase (10, 44, 46, 47) est en fonction, la différence des positions de phase de la troisième et de la quatrième porteuse par rapport aux positions de phases de la cinquième et de la sixième porteuse est choisie de telle manière que, dans le circuit de régulation secondaire (7), la condition de résonance est remplie et que les positions de phase des porteuses trois à six par rapport à la porteuse de comparaison est choisie de telle manière qu'un signal de vitesse de rotation pouvant être prélevé, par l'intermédiaire de filtres (30), du démodulateur synchrone (28) dans la première branche prend, pour une rotation donnée du gyroscope à vibration (1), un maximum.

7. Capteur de vitesse de rotation selon l'une des revendications précédentes, **caractérisé par le fait qu'**il est prévu une mémoire non volatile (11) pour des valeurs des positions de phase fixées lors d'une opération précédente de calibrage, lesdites valeurs pouvant être lues sur ladite mémoire lors de la mise en marche du capteur de vitesse de rotation et appliquées au synthétiseur de fréquences (10).

8. Capteur de vitesse de rotation selon la revendication 7, **caractérisé par le fait qu'**il se produit une correction de phase des porteuses en fonction de la température.

9. Capteur de vitesse de rotation selon la revendication 8, **caractérisé par le fait que**, pour la correction de phase en fonction de la température, on utilise une variation de la fréquence d'oscillation du gyroscope à vibration (1) comme grandeur correspondant à la variation de température.

10. Capteur de vitesse de rotation selon l'une des revendications 8 ou 9, **caractérisé par le fait que** des valeurs dépendant de la température sont mémorisées dans la mémoire non volatile (11).

11. Procédé permettant de calibrer un capteur de vitesse de rotation pourvu d'un gyroscope à vibration (1) faisant partie d'un circuit de régulation primaire (6) et d'un circuit de régulation secondaire (7), où chacun des circuits de régulation (6, 7) amplifient, démodulent, remodulent un signal de sortie du gyroscope à vibration (1) et l'appliquent de nouveau, en tant que signal d'excitation, au gyroscope à vibration (1) et où le circuit de régulation primaire (6) fournit la plus grande partie de l'énergie nécessaire à la poursuite de la vibration, **caractérisé par le fait que**, pour la production de porteuses, qui servent à la démodulation et à la remodulation, il est prévu un synthétiseur de fréquences (10) avec des moyens permettant de régler la position de phase réciproque des porteuses, le synthétiseur de fréquences (10) formant, en commun avec un circuit de comparaison de phase (44), un circuit de régulation de phase (10, 44, 46, 47), et, en outre, le signal de sortie amplifié dans le circuit de régulation primaire (6) et une porteuse de comparaison générée par le synthétiseur de fréquences (10) pouvant être appliqués au circuit de comparaison de phase (44),
- la position de phase d'une porteuse pour un modulateur dans le circuit de régulation primaire (6) étant réglée pour remplir une condition de résonance dans le circuit de régulation primaire (6),
- ensuite, un réglage de la position de phase de deux porteuses, décalées l'une par rapport à l'autre de 90°, pour des démodulateurs synchrones (28, 29) dans le circuit de régulation secondaire (7) étant effectué, en vue de parvenir à une condition de résonance, par rapport à la position de phase de deux autres porteuses, décalées l'une par rapport à l'autre de 90°, pour des modulateurs (37, 38) dans le circuit de régulation secondaire (7) et
- ensuite, alors que le gyroscope à vibration (1) est en rotation, les positions de phase des porteuses pour les démodulateurs synchrones (28, 29) et pour les modulateurs (37, 38) dans le circuit de régulation secondaire (7) sont décalées dans le même sens par rapport à la porteuse de comparaison de telle manière que le signal de vitesse de rotation ait un maximum.
